# EUROPÄISCHE PATENTSCHRIFT

(11) **EP 2 828 994 B1**
(45) Veröffentlichungstag und Bekanntmachung des Hinweises auf die Patenterteilung: **25.07.2018**
(21) Anmeldenummer: 13718084.0
(22) Anmeldetag: 07.03.2013
(51) Int. Cl.: H04K 3/00, H04B 17/00

(54) **VERFAHREN ZUM SELBSTTEST EINES REAKTIVEN FUNKSTÖRERS**
METHOD FOR THE SELF-TESTING OF A REACTIVE RADIO INTERFERER
PROCÉDÉ D'AUTOTEST D'UN BROUILLEUR RADIO RÉACTIF

(30) Priorität: 24.03.2012 DE 102012006228
(43) Veröffentlichungstag der Anmeldung: 28.01.2015
(73) Patentinhaber: HENSOLDT Sensors GmbH, 82024 Taufkirchen (DE)
(72) Erfinder: MEUSLING, Askold, 83607 Holzkirchen (DE); BRACK, Torben, 89134 Blaustein (DE); PIONTEK, Hubert, 89171 Illerkirchberg (DE)
(74) Vertreter: LifeTech IP Spies & Behrndt Patentanwälte PartG mbB
(86) Internationale Anmeldenummer: PCT/DE2013/000124
(87) Internationale Veröffentlichungsnummer: WO 2013/143518

(56) Entgegenhaltungen:
- DE-A1-102011 101 712
- US-A1- 2006 240 790
- US-A1- 2007 116 093
- US-A1- 2010 128 761
- US-B1- 6 505 041
- US-B1- 7 683 842

## Beschreibung

Die Erfindung betrifft ein Verfahren zum Selbsttest eines reaktiven Funkstörers nach dem Oberbegriff des Patentanspruchs 1.

Funkstörer sind technische Geräte, die zur Störung von Funkverbindungen, insbesondere Kommunikationsverbindungen, dienen. Sie werden unter anderem zum Schutz von Fahrzeugen oder Fahrzeugkonvois gegen ferngezündete Bomben (RCIEDs, Remote Controlled Improvised Explosive Devices) eingesetzt. Eine spezielle Art von Funkstörern sind reaktive Funkstörer. Die Störung erfolgt im Falle von reaktiven Funkstörern erst dann, wenn ein zu störendes Signal erkannt wird. Reaktive Funkstörer arbeiten dazu alternierend und fortlaufend in zwei verschiedenen Phasen:
- Beobachtungsphasen, in denen das existierende Funkspektrum empfangen und analysiert wird,
- Störphasen, in denen ein Störsignal ausgesendet wird, und zwar auf der Basis des in der Beobachtungsphase empfangenen Funkspektrums der Umgebung.

Die DE102009006861 A1 sowie die US2005/0041728 A1 beschreiben derartige reaktive Störsender.

In der US 2007/0116093 A1 wird ein Störsender beschrieben, bei dem während der Beobachtungsphase (Look-Through-Phase) eigene Kommunikation gesendet werden kann. Dies entspricht einer sogenannten Talk-Through Phase während der jedoch keine Signale empfangen werden können.

Die US 7,683,842 B1 beschreibt ein Electronic Surveillance Monitoring System (ESM) mit zusätzlichen Hardware-Komponenten zur Durchführung eines Systemtests im Ruhemodus, d.h. wenn kein Betrieb / Einsatz erfolgt.

US 6,505,041 B1 behandelt das Testen der Empfänger-Antennen einer Basisstation, in dem Signale eines Testsignal-Emitters von einer Sendeantenne der Basisstation zu einer Empfänger- Antenne gesendet werden. Für den Test werden zusätzliche Systemkomponenten eingesetzt, wobei die Überprüfung nur einen begrenzten Teil (speziell die Empfängerantenne) des Gesamtsystem abdeckt.

Um den angestrebten Schutz zu bieten, müssen alle Funktionselemente eines reaktiven Störsenders einwandfrei funktionieren. Deshalb ist es erforderlich, alle Komponenten, einschließlich der passiven, wie Kabel und Antennen, zu überwachen.

Die Überwachung soll möglichst kontinuierlich erfolgen, damit rechtzeitig bemerkt wird, wenn Bauteile nicht ordnungsgemäß funktionieren oder sich Kabelverbindungen gelockert haben.

Bekannte Systeme zum Selbsttest in reaktiven Funkstörern basieren auf Loop-Back-Verfahren zum Test von elektronischen Baugruppen. Damit werden aber insbesondere die kritischen Bereiche der Antennenverkabelung und der Antenne selber kaum geprüft. Des Weiteren werden nach dem Stand der Technik oft zusätzliche elektronische Baugruppen für Selbsttestzwecke in Systeme integriert oder zum Test externe Messhilfsmittel verwendet.

Der Erfindung liegt die Aufgabe zugrunde, ein Verfahren zum Selbsttest der Sende/Empfangszüge mit allen Komponenten einschließlich der Antennen eines reaktiven Störsenders zu schaffen.

Diese Aufgabe wird mit dem Verfahren nach Anspruch 1 gelöst. Vorteilhafte Ausführungen sind Gegenstand von Unteransprüchen.

Mit dem erfindungsgemäßen Verfahren werden für den Test keine zusätzlichen Mittel wie z.B. externe Messausrüstung oder integrierte Messelektronik, benötigt. Vielmehr kann der Selbsttest ausschließlich mit funktional im System ohnehin vorhandenen Baugruppen und ohne jegliche externen Hilfsmittel durchgeführt werden.

Der Selbsttest kann vorteilhaft kontinuierlich während des normalen Betriebs des Funkstörers durchgeführt werden, ohne dass eine wesentliche Einschränkung der Betriebsfunktion hingenommen werden müsste.

Darüber hinaus kann der erfindungsgemäße Selbsttest auch beim Systemstart, d.h. vor dem normalen Betrieb des Störsenders, durchgeführt werden.

Da bei dem erfindungsgemäßen Verfahren die kompletten Empfangs- und Sendezüge des reaktiven Störsenders mit allen Komponenten einschließlich der Antennen in den Test einbezogen werden können, wird eine neue Qualität der Testabdeckung in solchen Systemen erreicht.

Die Erfindung wird anhand konkreter Ausführungsbeispiele unter Bezugnahme auf Fig. näher erläutert. Es zeigen:
- Fig. 1: die Darstellung des Betriebs eines reaktiven Störsenders in Normalbetrieb (Stand der Technik);
- Fig. 2: die Darstellung des Ablaufs des erfindungsgemäßen Testverfahrens während des Normalbetriebs des Funkstörers;
- Fig. 3: die Darstellung des Ablaufs des erfindungsgemäßen Testverfahrens beim Systemstart;
- Fig. 4: die Darstellung der Systemstruktur eines erfindungsgemäßen reaktiven Funkstörers.

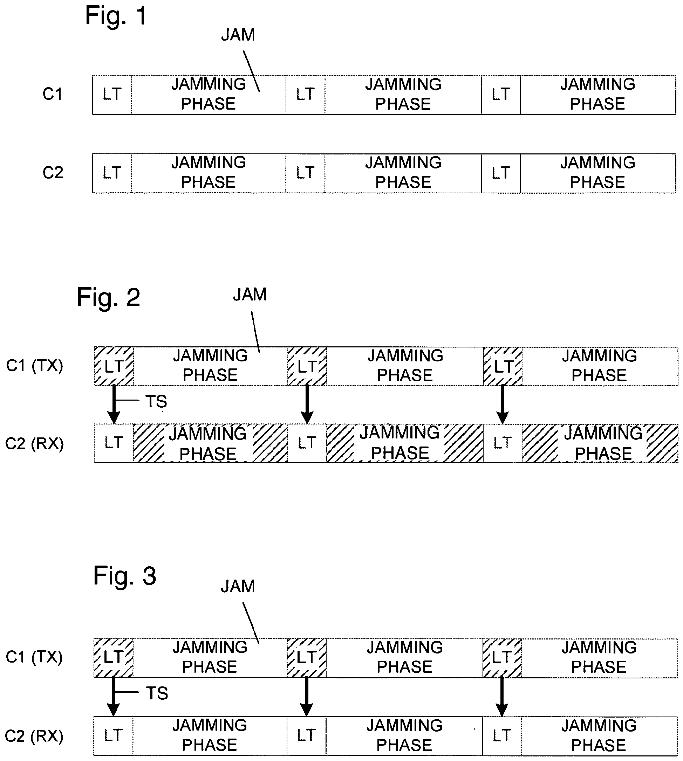

Fig. 1 zeigt die grundlegende Arbeitsweise eines reaktiven Störsenders im Normalbetrieb (ohne gleichzeitigen Testbetrieb), wie sie aus dem Stand der Technik bekannt ist. Von dieser Arbeitsweise und dem im Folgenden noch beschriebenen technischen Aufbau geht auch die Erfindung aus. Reaktive Funkstörer bestehen in der Regel aus mehreren Sende/Empfangszügen. In Fig. 1 sind beispielhaft zwei Sende/Empfangszüge C1, C2 berücksichtigt. Ein Sende/ Empfangszug besteht dabei aus einem an eine Antenne angeschlossenen Empfänger, einer Signalverarbeitung zur Spektrumsauswertung, einer Signalverarbeitung zur Sendesignalgenerierung und einem Sender mit nachgeschaltetem Leistungsverstärker sowie einer Sendeantenne. Das System arbeitet in einem Wechseln von Phasen der Spektrumsbeobachtung (look through) LT und Störphasen JAM, in denen ein Störsignalspektrum (auf Basis der vorhergehenden Spektrumsbeobachtung) ausgesendet wird (Jamming). Alle Sende/Empfangszüge arbeiten dabei nach dem gleichen Zeitschema, d.h. die Phasen LT und JAM der einzelnen Sende/Empfangszüge sind synchronisiert.

Der Ablauf des erfindungsgemäßen Selbsttests ist in Fig. 2 dargestellt, wobei dieser Selbsttest während des Normalbetriebs des Funkstörers abläuft. Es gilt weiterhin der in Fig. 1 erläuterte Wechsel zwischen Störphasen JAM und Beobachtungsphasen LT.
Generell gilt in den Fig. 2 und Fig. 3, dass bei schraffierten Phasen LT oder JAM der betreffende Sende/Empfangszug ein Signal aussendet.

Erfindungsgemäß wird einer von den im System vorhandenen Sende/Empfangszüge (in Fig. 1 der Sende/Empfangszug C1) so gesteuert, dass in der Beobachtungsphase LT anstatt des Empfangs des Signalspektrums ein Testsignal TS ausgesendet wird, welches von den Empfängern der anderen Sende/Empfangszüge (stellvertretend für einen oder mehrere das Testsignal empfangende Sende/Empfangszüge ist C2 eingezeichnet) des Systems empfangen und verarbeitet wird. Die das Testsignal TS empfangenden Sende/Empfangszüge C2 senden in der Störphase JAM weiterhin Störsignale aus, wobei das empfangene Testsignal nicht berücksichtigt wird. Der das Testsignal aussendende Sende/Empfangszug C1 bleibt dagegen in der Störphase JAM untätig. Mit Ausnahme des das Testsignal aussendenden Sende/Empfangszugs C1 arbeiten so weiterhin alle Sende/ Empfangszüge C2 im Normalbetrieb und stellen somit die Schutzwirkung des Systems sicher.

Je mehr Sende/Empfangszüge ein System hat, je geringer ist die Einschränkung der erreichbaren Schutzwirkung bei dem in Fig. 2 beschriebenem kontinuierlichem Betrieb der Selbsttestfunktion.

Fig. 3 zeigt das erfindungsgemäße Selbsttestverfahren angewandt beim Systemstart.
Hinsichtlich der Funktion von C1 ergibt sich gegenüber dem Verfahren nach Fig. 2 keine Änderung. Es wird während der Beobachtungsphase LT das Testsignal ausgesandt, während in der Störphase keine Abstrahlung erfolgt. Die übrigen Kanäle C2, die das Testsignal empfangen, werten dies zum Test aus. Eine Abstrahlung in den Störphasen JAM erfolgt in dieser Ausführung nicht.

Vorteilhaft wird das Spektralmuster des Testsignals TS aus Frequenz und Amplituden an aktuelle System- und Umgebungsparameter angepasst. Dadurch können unterschiedliche Systemkonfigurationen des Störsenders sowie aktuelle HF-Spektrumsbelegungen in der Umgebung des Systems berücksichtigt werden. Die Systemkonfigurationen können sich dabei insbesondere durch die Anordnung der Antennen, die Auslegung der Leistungsverstärker und in der Regel auch durch die Leitungslängen zum Anschluss der Antennen unterscheiden. Durch die Anpassung der Amplitude können unter den gegebenen System und Umfeldbedingungen jeweils optimale Empfangspegel am Sender generiert werden. Die Steuerung des Spektralmusters in der Frequenz kommt vorteilhaft zum Einsatz, um die Einflüsse von HF-Spektrumsbelegungen in der Umgebung des Systems auf den Selbsttest zu unterdrücken, wobei auch komplexe Wellenformen auch mit mehreren Einzelträgern und unterschiedlichen Modulationen eingesetzt werden können.

In der praktischen Systemauslegung ist es oft gefordert, die Anzahl der für ein Störsystem benötigten Antennen auf ein Mindestmaß zu begrenzen. So können insbesondere die Empfang- und Sendeantennen eines Sende/Empfangszugs durch Verwendung entsprechender Umschalter oder Zirkulatoren vereinigt werden. Darüber hinaus es auch möglich, für mehrere Sende/Empfangszüge, die in einem benachbarten Frequenzbereich arbeiten, nur eine gemeinsame Antenne zu verwenden. Das erfindungsgemäße Verfahren kann auch für solche Anordnungen eingesetzt werden.
Die Verwendung einer gemeinsamen Sende/Empfangsantenne für einen oder auch mehrere Sende/Empfangszüge hat dabei grundsätzlich keinen Einfluss auf die Steuerung des Selbsttestbetriebs. Im Falle einer gemeinsamen Sende-/Empfangsantenne für mehrere Sende/Empfangszüge sollte jedoch von diesen keiner zum Aussenden des Testsignals verwendet werden, da ansonsten die jeweiligen weiteren Sende/Empfangszüge für den Betrieb im normalen Störmodus gesperrt wären und eine parallele Durchführung des Testbetriebs neben dem regulären Störbetrieb eingeschränkt wäre.

Besonders vorteilhaft wird das Spektralmuster des Testsignals derart erzeugt, dass nur die harmonischen Frequenzen des das Testsignal erzeugenden Sende/ Empfangszugs genutzt werden, um Übersteuerungseffekte an dem empfangenden Sende/Empfangszug zu vermeiden. Soll z.B. die Funktion des Systems für eine bestimmte Frequenz f1 geprüft werden, so könnte eine direkte Aussendung der Frequenz f1 über den Leistungsverstärker ggf. zur Zerstörung der Eingangsstufe des Empfängers führen. Deshalb wird vorteilhaft die zu prüfende Frequenz nicht direkt generiert, sondern eine Frequenz f2, die auf der Frequenz f1 nach dem Leistungsverstärker eine entsprechend Harmonische erzeugt, z.B. bei 4. Ordnung f1 =5*f2. Die Harmonische liegt dann im Leistungspegel deutlich unter der direkt erzeugten Signalfrequenz und kann zum Selbsttest verwendet werden, ohne eine Zerstörung des Empfängers befürchten zu müssen.

Um Übersteuerungseffekte an dem empfangenden Sende/Empfangszug zu vermeiden, kann vorteilhaft während der Erzeugung des Testsignals die am Leistungsverstärker des sendenden Sende/Empfangszugs üblicherweise vorhandene Blanking-Funktion aktiviert werden. Konkret wird bei der Aussendung der zu testenden Frequenz f1 der Leistungsverstärker nicht wie im Normalbetrieb des Verstärkers durchgeschaltet, sondern vielmehr das Blanking-Signal eingeschaltet und so eine große Dämpfung für die Aussendung des am Eingang des Leistungsverstärkers anliegenden Signals mit der Frequenz f1 erreicht. Das Signal mit der Frequenz f1 wird damit in der Aussendung auf einen Pegel begrenzt, der den Empfänger vor Zerstörung bzw. Übersteuerung schützt.

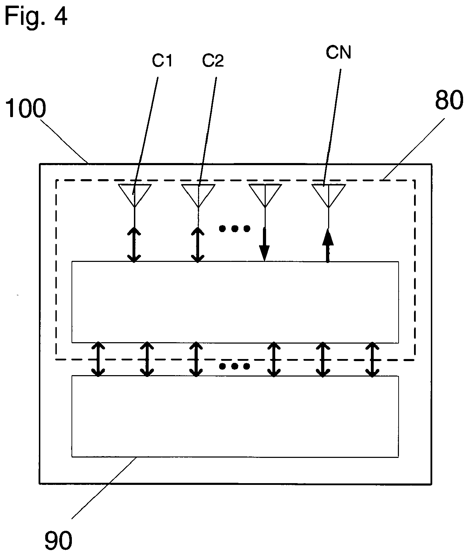

Da das erfindungsgemäße Verfahren im Wesentlichen nur durch eine Änderung der Softwarekonfiguration ohne Veränderungen in der Hardware implementiert werden kann, lassen sich damit auch modulare Systemkonzepte umsetzen. Fig. 4 zeigt hierfür ein Beispiel. Das Gesamtsystem 100 des Funkstörers wird in eine konfigurationsunabhängige Kernkomponente 90 und eine konfigurationsspezifische Komponente 80 (Bezugsziffer 10 bezeichnet in dieser schematischen Darstellung z.B. die einzelnen Sende/Empfangszüge C1,C2,....CN als Teil der konfigurationsspezifischen Komponente 80) aufgeteilt, wobei das erfindungsgemäße Verfahren in der konfigurationsunabhängigen Komponente 90 implementiert ist. Auf diese Weise können also mit derselben Kernkomponente unterschiedliche Konfigurationen des Funkstörers getestet und deren Funktion überwacht werden.

## Patentansprüche

1. Verfahren zum Selbsttest eines reaktiven Funkstörers, welcher eine Mehrzahl von zeitlich synchronisierten Sende/Empfangszügen (C1, C2,...CN) umfasst, wobei ein Sende/ Empfangszug aus einem an eine Antenne angeschlossenen Empfänger, einer Signalverarbeitung zur Spektrumsauswertung, einer Signalverarbeitung zur Sendesignalgenerierung und einem Sender mit nachgeschaltetem Leistungsverstärker sowie einer Sendeantenne besteht, die jeweils dazu eingerichtet sind, abwechselnd
- Beobachtungsphasen (LT) zum Empfang des Funkspektrums und
- Störphasen (JAM) zur Aussendung eines Störsignals auf der Basis des in der Beobachtungsphase empfangenen Funkspektrums,
zu durchlaufen,
**dadurch gekennzeichnet, dass** einer (C1) der Sende/Empfangszüge (C1, C2,...CN) innerhalb einer Beobachtungsphase (LT) ein Testsignal (TS) aussendet, das von mindestens einem anderen Sende/Empfangszug (C2) empfangen und ausgewertet wird, und der Selbsttest ohne zusätzliche Hardware durchgeführt wird.

2. Verfahren nach Anspruch 1, **dadurch gekennzeichnet, dass** es im Normalbetrieb des reaktiven Funkstörers durchgeführt wird, wobei der das Testsignal (TS) empfangende und verarbeitende Sende/Empfangszug (C2) in der Störphase (JAM) ein Störsignal unter Vernachlässigung des Testsignals (TS) aussendet.

3. Verfahren nach Anspruch 1, **dadurch gekennzeichnet, dass** es beim Systemstart durchgeführt wird, wobei der das Testsignal (TS) empfangende und verarbeitende Sende/Empfangszug (C2) in der Störphase (JAM) kein Störsignal aussendet.

4. Verfahren nach einem der vorangehenden Ansprüche, **dadurch gekennzeichnet, dass** das Verfahren unter Einsatz von Sende/Empfangszügen durchgeführt wird, welche gemeinsame Send- und Empfangsantennen aufweisen.

5. Verfahren nach einem der vorangehenden Ansprüche, **dadurch gekennzeichnet, dass** das Spektralmuster des Testsignals aus Frequenz und Amplituden an aktuelle System- und Umgebungsparameter angepasst wird.

6. Verfahren nach einem der vorangehenden Ansprüche, **dadurch gekennzeichnet, dass** das Spektralmuster des Testsignals derart erzeugt wird, dass nur die harmonischen Frequenzen des das Testsignal erzeugenden Sende/Empfangszugs genutzt werden, um Übersteuerungseffekte an dem empfangenden Sende/Empfangszug zu vermeiden.

7. Verfahren nach einem der vorangehenden Ansprüche, **dadurch gekennzeichnet, dass** während der Erzeugung des Testsignals die Blanking-Funktion des Leistungsverstärkers in dem das Testsignal sendenden Sende/Empfangszug aktiviert ist, um Übersteuerungseffekte an dem empfangenden Sende/Empfangszug zu vermeiden.

## Claims

1. Method for the self-testing of a reactive radio interferer comprising a plurality of time-synchronized transmission/reception paths (C1, C2,....CN), wherein a transmission/reception path consists of a receiver connected to an antenna, signal processing for spectral analysis, signal processing for transmission signal generation and a transmitter with a downstream power amplifier and a transmitting antenna, each arranged to alternately run through
- observation phases (LT) for reception of the radio spectrum and
- interference phases (JAM) for the transmission of an interference signal based on the radio spectrum received in the observation phase,
**characterized in that** one (C1) of the transmission/reception paths (C1, C2,....CN) transmits a test signal (TS) within an observation phase (LT) that is received and analyzed by at least one other transmission/reception path (C2), and the self-testing is carried out without additional hardware.

2. Method according to Claim 1, **characterized in that** it is carried out in the normal mode of the reactive radio interferer, wherein the transmission/reception path (C2) receiving and processing the test signal (TS) transmits an interference signal in the interference phase (JAM) regardless of the test signal (TS).

3. Method according to Claim 1, **characterized in that** it is carried out at system start, wherein transmission/reception path (C2) receiving and processing the test signal (TS) transmits no interference signal in the interference phase (JAM).

4. Method according to any one of the preceding claims, **characterized in that** the method is carried out using transmission/reception paths comprising common transmitting and receiving antennas.

5. Method according to any one of the preceding claims, **characterized in that** the spectral pattern of the test signal for frequency and amplitudes is adapted to current system and environmental parameters.

6. Method according to any one of the preceding claims, **characterized in that** the spectral pattern of the test signal is produced such that only the harmonic frequencies of the transmitting/receiving path producing the test signal are used in order to avoid saturation effects on the receiving transmission/reception path.

7. Method according to any one of the preceding claims, **characterized in that** during the generation of the test signal the blanking function of the power amplifier in the transmission/reception path transmitting the test signal is activated in order to prevent saturation effects on the receiving transmission/reception path.

## Revendications

1. Procédé d'autotest d'un brouilleur radio réactif comprenant une pluralité de trains d'émission/réception synchronisés dans le temps (C1, C2,..., CN), dans lequel un train d'émission/réception consiste en un récepteur connecté à une antenne, un processeur de signaux pour évaluer le spectre, un processeur de signaux pour générer des signaux d'émission, un émetteur comportant un amplificateur de puissance connecté en aval et une antenne d'émission, qui sont chacun conçus pour passer alternativement par
- des phases d'observation (LT) destinées à recevoir le spectre radioélectrique et
- des phases de brouillage (JAM) destinées à émettre un signal de brouillage sur la base du spectre radioélectrique reçu au cours de la phase d'observation,
**caractérisé en ce que** l'un (C1) des trains d'émission/réception (C1, C2, ...., CN) émet un signal de test (TS) au cours d'une phase d'observation (LT), lequel train est reçu et évalué par au moins un autre train d'émission/réception (C2), et l'autotest est effectué sans matériel supplémentaire.

2. Procédé selon la revendication 1, **caractérisé en ce qu'**il est mis en oeuvre dans le mode de fonctionnement normal du brouilleur radio réactif, dans lequel le train d'émission/réception (C2) recevant et traitant le signal de test (TS) émet un signal de brouillage au cours de la phase de brouillage (JAM) en ignorant le signal de test (TS).

3. Procédé selon la revendication 1, **caractérisé en ce qu'**il est mis en oeuvre au démarrage du système, dans lequel le train d'émission/réception (C2) recevant et traitant le signal de test (TS) n'émet pas de signal de brouillage au cours de la phase de brouillage (JAM).

4. Procédé selon l'une des revendications précédentes, **caractérisé en ce que** le procédé est mis en oeuvreen utilisant des trains d'émission/réception qui comportent des antennes d'émission et de réception communes.

5. Procédé selon l'une des revendications précédentes, **caractérisé en ce que** la configuration spectrale du signal de test est adaptée en fréquence et en amplitudes aux paramètres actuels du système et de l'environnement.

6. Procédé selon l'une des revendications précédentes, **caractérisé en ce que** la configuration spectrale du signal de test est générée de manière à ce que seules les fréquences harmoniques du train d'émission/réception générant le signal de test soient utilisées afin d'éviter des effets de saturation sur le train d'émission/réception en mode réception.

7. Procédé selon l'une des revendications précédentes, **caractérisé en ce que**, pendant que le signal de test est généré, la fonction de suppression de l'amplificateur de puissance est activée dans le train d'émission/réception émettant le signal de test pour éviter des effets de saturation sur le train d'émission/réception en mode réception.
